# EUROPEAN PATENT SPECIFICATION

(11) **EP 4 020 405 B1**
(45) Date of publication and mention of the grant of the patent: **18.03.2026**
(21) Application number: 21209749.7
(22) Date of filing: 23.11.2021
(51) Int. Cl.: H04N 23/23, G06V 20/56

(54) **ROAD LANE CONDITION DETECTION WITH LANE ASSIST FOR A VEHICLE USING INFRARED DETECTING DEVICE**
FAHRBAHNZUSTANDSERKENNUNG MIT FAHRSPURASSISTENZSYSTEM FÜR EIN FAHRZEUG MIT HILFE EINES INFRAROTDETEKTORS
DÉTECTION DE CONDITION DE VOIE DE ROUTE AVEC ASSISTANCE DE VOIE POUR VÉHICULE À L'AIDE D'UN DISPOSITIF DE DÉTECTION INFRAROUGE

(30) Priority: 22.12.2020 US 202017247751
(43) Date of publication of application: 29.06.2022
(73) Proprietor: AUMOVIO Autonomous Mobility US, LLC, Auburn Hills, Michigan 48326 (US)
(72) Inventor: LAPONSE, Jacob Andrew, Auburn Hills, MI 48326 (US)
(74) Representative: Isarpatent

(56) References cited:
- WO-A1-2019/195404
- US-A1- 2018 134 281
- US-A1- 2020 249 681

## Description

### FIELD

This invention relates to Advanced Driver-Assistance Systems (ADAS) and, in particular, to a system that detects road lane conditions and provides vehicle lane assist using an infrared detecting device.

### BACKGROUND

US 2020/249681 A1 describes a passive infra-red guidance system and method for augmenting operation of a vehicle on a roadway with a forward-looking infra-red imaging sensor mounted on the vehicle in operative communication with an image processor. The system identifies the presence of one or more melting agents arranged on the roadway using thermal imaging to detect a thermal contrast between portions of the roadway surface treated with the one or more melting agents and untreated portions of the roadway surface, and then determines the centerline of the travel lane in which the vehicle is travelling based on the identified melting agents.

WO 2019/195404 A1 describes a system and a method for selectively collecting information from a host vehicle. The method may include causing collection of navigational information associated with an environment traversed by the host vehicle; storing the collected navigational information; determining, based on an output of at least one navigational sensor, a location of the host vehicle; transmitting the determined location of the host vehicle to a server; receiving, from the server and in response to the transmitted determined location, a request for transmission of a selected subset of the navigational information collected by the host vehicle; and transmitting the selected subset of the navigational information to the server.

US 2018/134281 A1 describes a control system with a thermal imaging sensor configured to track a thermal profile of a wheel of a nearby vehicle and provide data indicative of the thermal profile. The control system also has a computing device which is configured to receive the data from the thermal imaging sensor, determine a wheel angle parameter of the front wheel of the nearby vehicle based on the data, and generate a control command to change at least one of a direction or an acceleration of the vehicle based on the determined wheel angle parameter.

ADAS technology has come a long way over the years and has saved multiple lives in the process. However, such systems can be improved further, particularly during driving at night. Although there is significantly less traffic on the road at night (60 percent less), 40 percent of all fatal car accidents occur at night. Lane conditions at night are some of the hardest things to gauge as a driver. Patent Application Publication US2018/0141561 A1 discloses a system, having a conventional camera, for detecting and assessing reflections of light on a road to determine road conditions. However, such systems may have difficulty accessing road conditions at night when visible light is at a minimum.

Furthermore, conventional lane assist systems for vehicles use conventional cameras to detect road lane markers typically painted on the road. However, during night driving with poor lighting, or when the lane markings lack sufficient paint, these systems may be unable to be detect the lane markings.

Thus, there is a need to provide an improved ADAS system using an infrared detecting device to detect road conditions and that can aid in the lane assist function.

### SUMMARY

An objective of the invention is to fulfill the need referred to above. In accordance with the principles of an embodiment, this objective is achieved by a system for a vehicle and a method with the features of the independent claims. Further advantageous embodiments are subject-matter of the dependent claims.

In one exemplary aspect, a system for s vehicle having a front, a rear, a right side and a left side is provided. The system includes an infrared detecting device mounted on the front of the vehicle. The infrared detecting device is constructed and arranged to detect road lane conditions 1) by detecting variations in road temperature and 2) by detecting heat tracks left on a road lane by preceding vehicles. A control unit is mounted in the vehicle and is connected to the infrared detecting device so as to process signals received from the infrared detecting device. The control unit is constructed and arranged to predict road conditions based on the variations in road temperature detected by the infrared detecting device.

In accordance with another aspect, a method provides road condition data for a vehicle. The vehicle has a front, a rear, a right side and a left side. The method provides an infrared detecting device on the front of the vehicle. Variations in road temperature is detected with the infrared detecting device. Road conditions are predicted in a control unit based on the variations in road temperature detected by the infrared detecting device.

In accordance with yet another aspect, a method of provides lane assist for a vehicle. The method provides an infrared detecting device on a front of the vehicle. Heat tracks left on a road lane by preceding vehicles are detected with the infrared detecting device. Road lane location is predicted by a control unit based on a path defined by the heat tracks detected by the infrared detecting device.

Other objectives, features and characteristics of the present invention, as well as the methods of operation and the functions of the related elements of the structure, the combination of parts and economics of manufacture will become more apparent upon consideration of the following detailed description and appended claims with reference to the accompanying drawings, all of which form a part of this specification.

### BRIEF DESCRIPTION OF THE DRAWINGS

The invention will be better understood from the following detailed description of the preferred embodiments thereof, taken in conjunction with the accompanying drawings, wherein like reference numerals refer to like parts, in which:
FIG. 1 is a plan view of a vehicle equipped with an advanced driver assist or autonomous vehicle system for determining road condition in accordance with an embodiment of the invention.
FIG. 2 is a schematic view of the system of FIG. 1.
FIG. 3 is a plan view of a vehicle equipped with an advanced driver assist or autonomous vehicle system for lane assist in accordance with another aspect of the invention.

### DETAILED DESCRIPTION OF EXEMPLARY EMBODIMENTS

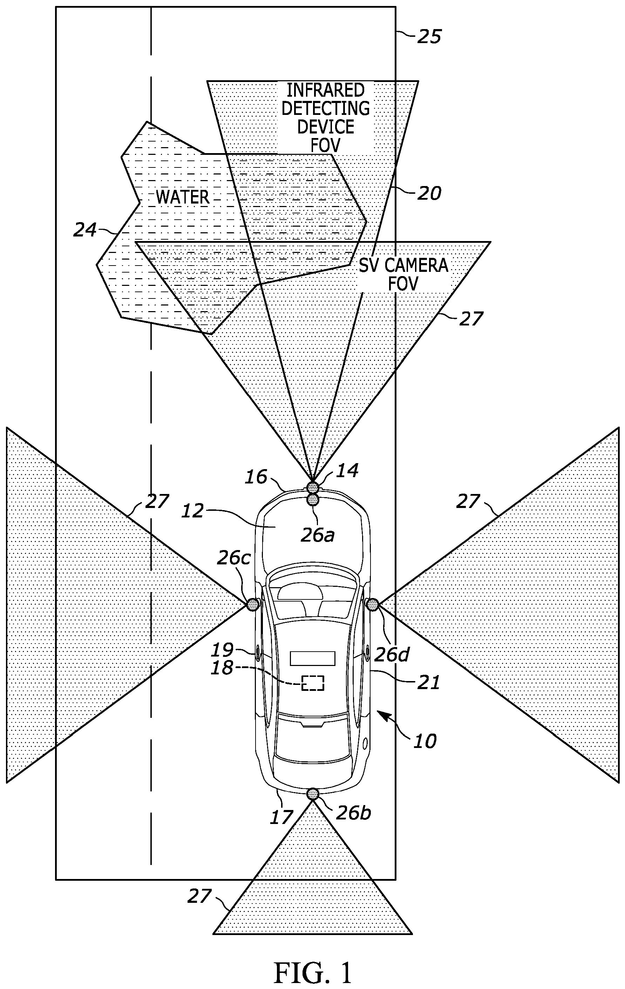

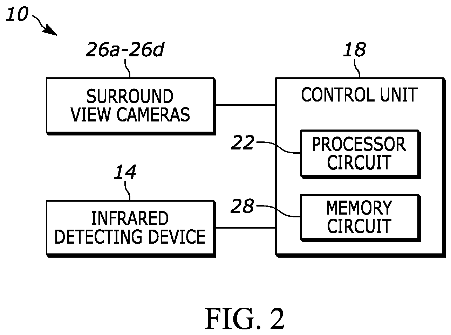

With reference to FIG. 1, an advanced driver assist or autonomous vehicle system is shown, generally indicated at 10, for a vehicle 12 in accordance with an embodiment. The system 10 includes an infrared measuring device 14, preferably mounted on the front 16 of the vehicle 12, such as on or in the grill or front bumper. As best shown in FIG. 2, the system also includes a control unit 18 mounted in the vehicle 12 and connected to the infrared detecting device 14 so as to process signals received from the infrared detecting device 14. The infrared detecting device's field of view (FOV) in front of the vehicle 10 is shown at 20.

In the embodiment, the infrared (IR) detecting device 14 comprises an infrared camera or a thermal imaging camera. The infrared camera typically uses short wavelength infrared light to illuminate an area of interest. Some of the infrared energy is reflected back to the infrared camera and interpreted to generate an image data. A thermal imaging camera typically uses mid or long wavelength infrared energy. Thermal imaging cameras are passive, and only sense differences in heat. Thus, the infrared detecting device 14 can detect variations in road temperature (heat signature) without the presence of light. This allows algorithms, executed by the processor circuit 22 of the control unit 18, to use this temperature variation data to determine predictions of road conditions. As shown in FIG. 1, for example, the infrared detecting device 14 can identify that there is water 24 on the road 25, based on the infrared data. Thus, for example, the processor circuit 22 can execute an algorithm including the steps of receiving a heat signature of an object (e.g., water) on the road that has a heat signature different from a heat signature of surrounding areas on the road; comparing the received heat signal to known heat signals stored in a memory circuit 28; and predicting or identifying the type of object defining a road condition on the road based on the comparison. The output from the infrared road condition algorithm can then be compared to the output from the standard systems already present on the vehicle and these outputs can then be sent to the main computer system that is controlling the vehicle actuation for fusion.

The data provided by the infrared detecting device 14 can be used in collaboration with the data from a conventional surround view camera system having a plurality of normal (non IR) cameras 26a-26d, each configure to obtain an image. First camera 26a is located on the front 16 of the vehicle 12, second camera 26b is located on the rear 17 of the vehicle 12, third camera 26c is located on the left side 19 of the vehicle 12 and fourth camera 26d is located on the right side 21 of the vehicle 12. These cameras 26a-26d are typically mono cameras having a FOV 27 of up to 125 degrees or fish-eye cameras having a FOV greater than 180 degrees, which can be used at least for lane assist, parking assist, and emergency braking for crash avoidance. Cameras 26a-26d are connected to the control unit 18. Certain of the cameras 26a-26d can also be used for road condition observance, as disclosed Patent Application Publication US2018/0141561 A1. Thus, the light-reflective image capturing cameras 26a-26d, can provide image data to the control unit 18 regarding road conditions when sufficient light is available, with the infrared detecting device 14 providing thermal data regarding road conditions to the control unit 18 when sufficient light is unavailable. With such data, the control unit 18 or other vehicle controller can control various vehicle systems (e.g., vehicle braking, speed control, etc.) depending on the sensed or predicted road conditions. Memory circuit 28 of the control unit 18 can store the algorithms and/or data from the infrared detecting device 14, and cameras 26a-26d.

Thus, the infrared detecting device 14 can detect water, ice, or any lane irregularities much easier at night. The infrared detecting device 14 is able to determine road conditions based on variations in infrared readings across the road and these readings can then be compared to the output provided by the surround view cameras 26a-26d for improved accuracy. It can be appreciated that the control unit 18 can receive data other than from just the infrared detecting device 14 and/or the cameras 26a-26d, such as outside temperature, humidity, wind speed data, whether the vehicle wipers are on, etc. for use in predicting road conditions. Also, the infrared detecting device 14 can be always on, or can be activated based on an ambient light sensor (e.g., the conventional light sensor that can automatically turn on the vehicle's lights as daylight fades).

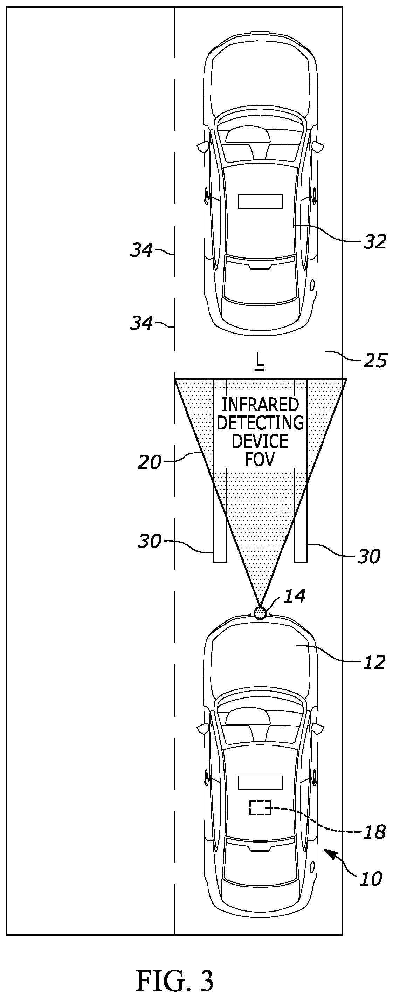

With reference to FIG. 3, the infrared detecting device 14 can be employed in a lane assist application by detecting heat tracks 30 on a road lane L left by another vehicle 30 or vehicles preceding the vehicle 12 traveling down the road 25. The heat from the tires of a vehicle 32 driving on the road creates a trail behind the vehicle 32. With multiple vehicles driving in the same road lane L, specific portions of the road lane L are warmer than others. High traffic and higher speed roads will provide better heat tracks 30 to follow.

The processor circuit 22 of the control unit 18 can execute an algorithm to predict the road lane L location, based on the path most traveled by the other vehicles 32. For example, the processor circuit 22 can execute an algorithm including the steps of receiving a heat signature of heat tracks 30 on the road that have a heat signature different from a heat signature of surrounding areas on the road; and calculating or predicting a lane location L on the road based on the location of the heat tracks 30. If the driver deviates from the lane L, the control unit 18 can activate a warning signal or can cause automatic control of the steering to bring the vehicle back into the lane. Alternatively, the output from the infrared lane assist algorithm can then be compared to the output from the standard systems already present on the vehicle and these outputs can then be sent to the main computer system that is controlling the vehicle actuation for fusion.

The use of the infrared detecting device 14 reduces the need for quality lane markers 34 that are employed in conventional lane keeping technologies. The infrared detecting device 14 should be mounted to the front of the vehicle 12 as close to the road as possible. Infrared detecting device 14 can be used alone, or in conjunction with the surround view cameras 26a-26d of FIG. 1 that can provide data on the location of the lane markers 34. Thus, the infrared detecting device 14 can be used to enhance or as a backup to the regular lane marker detection system (e.g., mono-cameras) that is used for conventional lane assist. When lane markers 34 are unable to be detected by certain of the mono cameras 26a-26d due to poor lighting or lack of paint, the infrared detecting device 14 can use the heat tracks 30 from other vehicles as a reference to where the lane L should be.

The operations and algorithms described herein can be implemented as executable code within a micro-controller or control unit 18 having processor circuit 22 as described, or stored on a standalone computer or machine readable non-transitory tangible storage medium that are completed based on execution of the code by a processor circuit implemented using one or more integrated circuits. Example implementations of the disclosed circuits include hardware logic that is implemented in a logic array such as a programmable logic array (PLA), a field programmable gate array (FPGA), or by mask programming of integrated circuits such as an application-specific integrated circuit (ASIC). Any of these circuits also can be implemented using a software-based executable resource that is executed by a corresponding internal processor circuit such as a micro-processor circuit (not shown) and implemented using one or more integrated circuits, where execution of executable code stored in an internal memory circuit causes the integrated circuit(s) implementing the processor circuit to store application state variables in processor memory, creating an executable application resource (e.g., an application instance) that performs the operations of the circuit as described herein. Hence, use of the term "circuit" in this specification refers to both a hardware-based circuit implemented using one or more integrated circuits and that includes logic for performing the described operations, or a software-based circuit that includes a processor circuit (implemented using one or more integrated circuits), the processor circuit including a reserved portion of processor memory for storage of application state data and application variables that are modified by execution of the executable code by a processor circuit. The memory circuit 28 can be implemented, for example, using a non-volatile memory such as a programmable read only memory (PROM) or an EPROM, and/or a volatile memory such as a DRAM, etc.

The foregoing preferred embodiments have been shown and described for the purposes of illustrating the structural and functional principles of the present invention, as well as illustrating the methods of employing the preferred embodiments and are subject to change without departing from such principles. Therefore, this invention includes all modifications encompassed within the scope of the following claims.

## Claims

1. A system (10) for a vehicle (12), the vehicle (12) having a front, a rear, a right side and a left side, the system (10) comprising:
an infrared detecting device (14) mounted on the front of the vehicle (12), the infrared detecting device (14) being constructed and arranged to detect road lane conditions 1) by detecting variations in road temperature and 2) by detecting heat tracks (30) left on a road lane by preceding vehicles, and
a control unit (18) mounted in the vehicle (12) and connected to the infrared detecting device (14) so as to process signals received from the infrared detecting device (14) and received signals comprising at least one of outside temperature data, humidity data, wind speed data, or vehicle wiper activation data, the control unit (18) being constructed and arranged to predict road conditions based on the variations in road temperature detected by the infrared detecting device (14) and based on the at least one of the outside temperature data, the humidity data, the wind speed data or the vehicle wiper activation data.

2. The system (10) of claim 1, wherein the infrared detecting device (14) is an infrared camera or a thermal imaging camera.

3. The system (10) according to any of the preceding claims, wherein the control unit (18) includes a processor circuit constructed and arranged to execute algorithms to predict the road conditions.

4. The system (10) of claim 3, wherein the processor circuit (22) is constructed and arranged to execute the algorithm including the steps of receiving a heat signature of an object on the road that has a heat signature different from a heat signature of surrounding areas on the road; comparing the received heat signal to known heat signals stored in a memory circuit; and predicting or identifying the type of object defining a road condition on the road based on the comparison.

5. The system (10) of claim 3 or 4, wherein the processor circuit (22) is constructed and arranged to execute an algorithm including the steps of receiving a heat signature of heat tracks (30) on the road that have a heat signature different from a heat signature of surrounding areas on the road.

6. The system (10) according to any of the preceding claims, further comprising:
a first camera (26a) mounted on the front of the vehicle (12),
a second camera (26b) mounted on the rear of the vehicle (12),
a third camera (26c) mounted on the left side of the vehicle (12), and
a fourth camera (26d) mounted on the right side of the vehicle (12),
wherein the first, second, third and fourth cameras (26a-d) define image capturing cameras and are each connected with the control unit (18) such that the infrared detecting device (14) in conjunction with certain of the image capturing cameras can 1) provide image data to the control unit (18) regarding road conditions when sufficient light is available, and the infrared detecting device (14) can provide thermal data to the control unit (18) regarding road conditions when sufficient light is unavailable, or 2) to provide lane assist data based on the detected heat tracks (30) alone or in conjunction with image data from the cameras.

7. The system (10) of claim 6, wherein each of first, second, third and fourth camera (26a-d) is a mono camera having a field of view of up to 125 degrees or a fish-eye camera having a field of view greater than 180 degrees.

8. The system (10) of claim 6 or 7, wherein certain of the first, second, third and fourth cameras (26a-d) are configured to detect road lane markers or reflection of light on the road.

9. A method of providing road condition data for a vehicle (12), in particular by employing a system (10) according to any of the claims 1 to 8, the vehicle (12) having a front, a rear, a right side and a left side, the method comprising:
providing an infrared detecting device (14) on the front of the vehicle (12),
detecting, with the infrared detecting device (14), variations in road temperature,
receiving signals comprising at least one of outside temperature data, humidity data, wind speed data, or vehicle wiper activation data; and
predicting, in a control unit (18), road conditions based on the variations in road temperature detected by the infrared detecting device (14) and based on the at least one of the outside temperature data, the humidity data, the wind speed data, or the vehicle wiper activation data.

10. The method of claim 9, wherein the infrared detecting device (14) is provided as an infrared camera or as a thermal imaging camera.

11. The method of claim 9 or 10, wherein the control unit (18) includes a processor circuit and the method further comprises:
executing, via the processor circuit, an algorithm to predict the road conditions by receiving a heat signature of an object on the road that has a heat signature different from a heat signature of surrounding areas on the road; comparing the received heat signal to known heat signals stored in a memory circuit; and predicting or identifying the type of object defining a road condition on the road based on the comparison.

12. The method according to any of the claims 9 to 11, further comprising:
providing a first camera (26a) mounted on the front of the vehicle (12),
providing a second camera (26b) mounted on the rear of the vehicle (12),
providing a third camera (26c) mounted on the left side of the vehicle (12),
providing a fourth camera (26d) mounted on the right side of the vehicle (12),
wherein the first, second, third and fourth cameras (26a-d) define image capturing cameras and are each connected with the control unit (18),
providing, via certain of the image capturing cameras, image data to the control unit (18) regarding road conditions when sufficient light is available, and
providing, with the infrared detecting device (14), thermal data to the control unit (18) regarding road conditions when sufficient light is unavailable.

## Patentansprüche

1. System (10) für ein Fahrzeug (12), wobei das Fahrzeug (12) eine Vorderseite, eine Rückseite, eine rechte Seite und eine linke Seite aufweist und das System (10) Folgendes umfasst:
eine Infrarotdetektionsvorrichtung (14), die an der Vorderseite des Fahrzeugs (12) montiert ist, wobei die Infrarotdetektionsvorrichtung (14) konstruiert und ausgelegt ist, Fahrspurzustände 1) durch Detektieren von Schwankungen der Fahrbahntemperatur und 2) durch Detektieren von Wärmebahnen (30), die auf einer Fahrspur durch vorausfahrende Fahrzeuge hinterlassen werden, zu detektieren, und
eine Steuereinheit (18), die im Fahrzeug (12) montiert ist und mit der Infrarotdetektionsvorrichtung (14) verbunden ist, um Signale, die von der Infrarotdetektionsvorrichtung (14) empfangen wurden, und
empfangene Signale, die mindestens eines von Außentemperaturdaten, Luftfeuchtigkeitsdaten, Windgeschwindigkeitsdaten oder Fahrzeugwischvorrichtungsaktivierungsdaten umfassen, zu verarbeiten, wobei die Steuereinheit (18) konstruiert und ausgelegt ist, Fahrbahnzustände auf der Grundlage der Schwankungen der Fahrbahntemperatur, die durch die Infrarotdetektionsvorrichtung (14) detektiert wurden, und auf der Grundlage der mindestens einen der Außentemperaturdaten, der Luftfeuchtigkeitsdaten, der Windgeschwindigkeitsdaten oder der Fahrzeugwischvorrichtungsaktivierungsdaten vorherzusagen.

2. System (10) nach Anspruch 1, wobei die Infrarotdetektionsvorrichtung (14) eine Infrarotkamera oder eine Wärmebildgebungskamera ist.

3. System (10) nach einem der vorhergehenden Ansprüche, wobei die Steuereinheit (18) eine Prozessorschaltung enthält, die konstruiert und ausgelegt ist, Algorithmen auszuführen, um die Fahrbahnzustände vorherzusagen.

4. System (10) nach Anspruch 3, wobei die Prozessorschaltung (22) konstruiert und ausgelegt ist, den Algorithmus auszuführen, der die Schritte des Empfangens einer Wärmesignatur eines Objekts auf der Fahrbahn, das eine Wärmesignatur aufweist, die von einer Wärmesignatur der umliegenden Bereiche auf der Fahrbahn verschieden ist; Vergleichen des empfangenen Wärmesignals mit bekannten Wärmesignalen, die in einer Speicherschaltung gespeichert sind; und Vorhersagen oder Identifizieren des Typs des Objekts, das einen Fahrbahnzustand auf der Fahrbahn definiert, auf der Grundlage des Vergleichs umfasst.

5. System (10) nach Anspruch 3 oder 4, wobei die Prozessorschaltung (22) konstruiert und ausgelegt ist, einen Algorithmus auszuführen, der die Schritte des Empfangens einer Wärmesignatur von Wärmebahnen (30) auf der Fahrbahn, die eine Wärmesignatur aufweisen, die von einer Wärmesignatur der umliegenden Bereiche auf der Fahrbahn verschieden ist, umfasst.

6. System (10) nach einem der vorhergehenden Ansprüche, das ferner Folgendes umfasst:
eine erste Kamera (26a), die an der Vorderseite des Fahrzeugs (12) montiert ist,
eine zweite Kamera (26b), die an der Rückseite des Fahrzeugs (12) montiert ist,
eine dritte Kamera (26c), die an der linken Seite des Fahrzeugs (12) montiert ist, und
eine vierte Kamera (26d), die an der rechten Seite des Fahrzeugs (12) montiert ist,
wobei die erste, die zweite, die dritte und die vierte Kamera (26a-d) Bildaufnahmekameras definieren und jeweils mit der Steuereinheit (18) verbunden sind, derart, dass die Infrarotdetektionsvorrichtung (14) in Verbindung mit bestimmten der Bildaufnahmekameras 1) Bilddaten hinsichtlich von Fahrbahnzuständen für die Steuereinheit (18) bereitstellen kann, wenn ausreichendes Licht verfügbar ist, und die Infrarotdetektionsvorrichtung (14) Wärmedaten hinsichtlich von Fahrbahnzuständen für die Steuereinheit (18) bereitstellen kann, wenn ausreichendes Licht nicht verfügbar ist, oder 2) Spurunterstützungsdaten auf der Grundlage der detektierten Wärmebahnen (30) allein oder in Verbindung mit Bilddaten von den Kameras bereitstellen kann.

7. System (10) nach Anspruch 6, wobei jede der ersten, der zweiten, der dritten und der vierten Kamera (26a-d) eine Einzelkamera, die ein Sichtfeld von bis zu 125 Grad aufweist, oder eine Fischaugenkamera, die ein Sichtfeld größer als 180 Grad aufweist, ist.

8. System (10) nach Anspruch 6 oder 7, wobei bestimmte der ersten, der zweiten, der dritten und der vierten Kamera (26a-d) konfiguriert sind, Fahrbahnspurmarkierungen oder eine Reflexion von Licht auf der Fahrbahn zu detektieren.

9. Verfahren zum Bereitstellen von Fahrbahnzustandsdaten für ein Fahrzeug (12), insbesondere durch Einsetzen eines Systems (10) nach einem der Ansprüche 1 bis 8, wobei das Fahrzeug (12) eine Vorderseite, eine Rückseite, eine rechte Seite und eine linke Seite aufweist und das Verfahren Folgendes umfasst:
Bereitstellen einer Infrarotdetektionsvorrichtung (14) auf der Vorderseite des Fahrzeugs (12),
Detektieren mit der Infrarotdetektionsvorrichtung (14) von Schwankungen der Fahrbahntemperatur,
Empfangen von Signalen, die mindestens eines von Außentemperaturdaten, Luftfeuchtigkeitsdaten, Windgeschwindigkeitsdaten oder Fahrzeugwischvorrichtungsaktivierungsdaten umfassen; und
Vorhersagen in einer Steuereinheit (18) von Fahrbahnzuständen auf der Grundlage der Schwankungen der Fahrbahntemperatur, die durch die Infrarotdetektionsvorrichtung (14) detektiert wurden, und auf der Grundlage der mindestens einen der Außentemperaturdaten, der Luftfeuchtigkeitsdaten, der Windgeschwindigkeitsdaten oder der Fahrzeugwischvorrichtungsaktivierungsdaten.

10. Verfahren nach Anspruch 9, wobei die Infrarotdetektionsvorrichtung (14) als eine Infrarotkamera oder als eine Wärmebildgebungskamera bereitgestellt ist.

11. Verfahren nach Anspruch 9 oder 10, wobei die Steuereinheit (18) eine Prozessorschaltung enthält und das Verfahren ferner Folgendes umfasst:
Ausführen mittels der Prozessorschaltung eines Algorithmus, um die Fahrbahnzustände durch Empfangen einer Wärmesignatur eines Objekts auf der Fahrbahn, das eine Wärmesignatur aufweist, die von einer Wärmesignatur der umliegenden Bereiche auf der Fahrbahn verschieden ist, vorherzusagen; Vergleichen des empfangenen Wärmesignals mit bekannten Wärmesignalen, die in einer Speicherschaltung gespeichert sind; und Vorhersagen oder Identifizieren des Typs eines Objekts, das einen Fahrbahnzustand auf der Fahrbahn definiert, auf der Grundlage des Vergleichs.

12. Verfahren nach einem der Ansprüche 9 bis 11, das ferner Folgendes umfasst:
Bereitstellen einer ersten Kamera (26a), die auf der Vorderseite des Fahrzeugs (12) montiert ist,
Bereitstellen einer zweiten Kamera (26b), die auf der Rückseite des Fahrzeugs (12) montiert ist,
Bereitstellen einer dritten Kamera (26c), die auf der linken Seite des Fahrzeugs (12) montiert ist,
Bereitstellen einer vierten Kamera (26d), die auf der rechten Seite des Fahrzeugs (12) montiert ist,
wobei die erste, die zweite, die dritte und die vierte Kamera (26a-d) Bildaufnahmekameras definieren und jeweils mit der Steuereinheit (18) verbunden sind,
Bereitstellen mittels bestimmter der Bildaufnahmekameras von Bilddaten hinsichtlich von Fahrbahnzuständen für die Steuereinheit (18), wenn ausreichendes Licht verfügbar ist, und
Bereitstellen mit der Infrarotdetektionsvorrichtung (14) von Wärmedaten hinsichtlich von Fahrbahnzuständen für die Steuereinheit (18), wenn ausreichendes Licht nicht verfügbar ist.

## Revendications

1. Système (10) pour un véhicule (12), le véhicule (12) présentant un avant, un arrière, un côté droit et un côté gauche, le système (10) comprenant :
un dispositif de détection infrarouge (14) monté sur l'avant du véhicule (12), le dispositif de détection infrarouge (14) étant conçu et agencé pour détecter des conditions de voie de circulation (1) en détectant des variations de température de chaussée et (2) en détectant des traces thermiques (30) laissées sur une voie de circulation par des véhicules précédents, et
une unité de commande (18) montée dans le véhicule (12) et reliée au dispositif de détection infrarouge (14) de manière à traiter des signaux reçus du dispositif de détection infrarouge (14) et des signaux reçus comprenant au moins un élément parmi des données de température extérieure, des données d'humidité, des données de vitesse du vent, ou des données d'activation d'essuie-glaces du véhicule, l'unité de commande (18) étant conçue et agencée pour prédire des conditions de chaussée sur la base des variations de température de chaussée détectées par le dispositif de détection infrarouge (14) et sur la base de l'au moins un élément parmi les données de température extérieure, les données d'humidité, les données de vitesse du vent, ou les données d'activation d'essuie-glaces du véhicule.

2. Système (10) selon la revendication 1, dans lequel le dispositif de détection infrarouge (14) est une caméra infrarouge ou une caméra d'imagerie thermique.

3. Système (10) selon l'une quelconque des revendications précédentes, dans lequel l'unité de commande (18) comporte un circuit processeur conçu et agencé pour exécuter des algorithmes destinés à prédire les conditions de chaussée.

4. Système (10) selon la revendication 3, dans lequel le circuit processeur (22) est conçu et agencé pour exécuter l'algorithme comportant les étapes de réception d'une signature thermique d'un objet sur la chaussée présentant une signature thermique différente d'une signature thermique de zones environnantes sur la chaussée ; de comparaison du signal thermique reçu avec des signaux thermiques connus stockés dans un circuit mémoire ; et de prédiction ou d'identification du type d'objet définissant une condition de chaussée sur la chaussée sur la base de la comparaison.

5. Système (10) selon la revendication 3 ou 4, dans lequel le circuit processeur (22) est conçu et agencé pour exécuter un algorithme comportant les étapes de réception d'une signature thermique de traces thermiques (30) sur la chaussée qui présentent une signature thermique différente d'une signature thermique de zones environnantes sur la chaussée.

6. Système (10) selon l'une quelconque des revendications précédentes, comprenant en outre :
une première caméra (26a) montée sur l'avant du véhicule (12),
une deuxième caméra (26b) montée sur l'arrière du véhicule (12),
une troisième caméra (26c) montée sur le côté gauche du véhicule (12), et
une quatrième caméra (26d) montée sur le côté droit du véhicule (12),
les première, deuxième, troisième et quatrième caméras (26a-d) définissant des caméras de capture d'image et étant reliées chacune à l'unité de commande (18) de sorte que le dispositif de détection infrarouge (14) conjointement avec certaines des caméras de capture d'image peut 1) fournir des données d'image à l'unité de commande (18) concernant des conditions de chaussée lorsque la lumière disponible est suffisante, et le dispositif de détection infrarouge (14) peut fournir des données thermiques à l'unité de commande (18) concernant des conditions de chaussée lorsque la lumière disponible n'est pas suffisante, ou 2) fournir des données d'aide au maintien de voie sur la base des traces thermiques détectées (30) seules ou conjointement avec des données d'image provenant des caméras.

7. Système (10) selon la revendication 6, dans lequel chacune des première, deuxième, troisième et quatrième caméras (26a-d) est une caméra mono présentant un champ de vision allant jusqu'à 125 degrés ou une caméra de type fish-eye présentant un champ de vision supérieur à 180 degrés.

8. Système (10) selon la revendication 6 ou 7, dans lequel certaines des première, deuxième, troisième et quatrième caméras (26a-d) sont configurées pour détecter des marquages de voie de circulation ou la réflexion de la lumière sur la chaussée.

9. Procédé de fourniture de données de conditions de chaussée pour un véhicule (12), en particulier au moyen d'un système (10) selon l'une quelconque des revendications 1 à 8, le véhicule (12) présentant un avant, un arrière, un côté droit et un côté gauche, le procédé comprenant :
la fourniture d'un dispositif de détection infrarouge (14) sur l'avant du véhicule (12),
la détection, à l'aide du dispositif de détection infrarouge (14), de variations de température de chaussée,
la réception de signaux comprenant au moins un élément parmi des données de température extérieure, des données d'humidité, des données de vitesse du vent, ou des données d'activation d'essuie-glaces du véhicule ; et
la prédiction, dans une unité de commande (18), de conditions de chaussée sur la base des variations de température de chaussée détectées par le dispositif de détection infrarouge (14) et sur la base de l'au moins un élément parmi les données de température extérieure, les données d'humidité, les données de vitesse du vent, ou les données d'activation d'essuie-glaces du véhicule.

10. Procédé selon la revendication 9, dans lequel le dispositif de détection infrarouge (14) est fourni sous la forme d'une caméra infrarouge ou sous la forme d'une caméra d'imagerie thermique.

11. Procédé selon la revendication 9 ou 10, dans lequel l'unité de commande (18) comporte un circuit processeur et le procédé comprend en outre :
l'exécution, via le circuit processeur, d'un algorithme de prédiction des conditions de chaussée par réception d'une signature thermique d'un objet sur la chaussée présentant une signature thermique différente d'une signature thermique de zones environnantes sur la chaussée ; comparaison du signal thermique reçu avec des signaux thermiques connus stockés dans un circuit mémoire ; et prédiction ou identification du type d'objet définissant une condition de chaussée sur la chaussée sur la base de la comparaison.

12. Procédé selon l'une quelconque des revendications 9 à 11, comprenant en outre :
la fourniture d'une première caméra (26a) montée sur l'avant du véhicule (12),
la fourniture d'une deuxième caméra (26b) montée sur l'arrière du véhicule (12),
la fourniture d'une troisième caméra (26c) montée sur le côté gauche du véhicule (12),
la fourniture d'une quatrième caméra (26d) montée sur le côté droit du véhicule (12),
les première, deuxième, troisième et quatrième caméras (26a-d) définissant des caméras de capture d'image et étant reliées chacune à l'unité de commande (18),
la fourniture, via certaines des caméras de capture d'image, de données d'image à l'unité de commande (18) concernant des conditions de chaussée lorsque la lumière disponible est suffisante, et
la fourniture, à l'aide du dispositif de détection infrarouge (14), de données thermiques à l'unité de commande (18) concernant des conditions de chaussée lorsque la lumière disponible n'est pas suffisante.
